# EUROPÄISCHE PATENTANMELDUNG

(11) **EP 1 260 897 A2**
(43) Veröffentlichungstag der Anmeldung: **27.11.2002**
(21) Anmeldenummer: 02010522.7
(22) Anmeldetag: 10.05.2002
(51) Int. Cl.: G05G 9/047

(54) **Eingabegerät mit einem personenbedienbaren Betätigungsteil zum Steuern der Positionierung eines Objekts**

(30) Priorität: 25.05.2001 DE 10125575
(71) Anmelder: Deutsches Zentrum für Luft- und Raumfahrt e.V., 51147 Köln (DE)
(72) Erfinder: Gombert, Bernd, Dipl.-Ing., 82284 Grafrath (DE)
(74) Vertreter: von Kirschbaum, Albrecht, Dipl.-Ing.

(57) **Zusammenfassung**

Das gemäß der Erfindung ausgebildete Eingabegerät zum Steuern der Positionierung eines Objekts unter Verwendung eines Kraft-Moment-Sensors, mit dem Linearverschiebungen und/oder Drehauslenkungen erfaßt und direkt in gesteuerte translatorische und rotatorische Bewegungen bzw. Geschwindigkeiten des zu positionierenden Objekts umgesetzt werden, weist an seinem personenbedienbaren Betätigungsteil (8) ein vom Mund oder von einer anderen Kopfpartie, z.B. vom Kinn, einer Person erfaßbares oder aufnehmbares Mundstück (11) bzw. Führungsstück auf, das so ausgebildet ist, daß das Betätigungsteil durch den Mund bzw. die betreffende Kopfpartie der Person bedienbar ist. Das Eingabegerät nach der Erfindung läßt sich insbesondere bei solchen Arbeiten und Betätigungen einsetzen, bei denen zur Arbeit keine Hand mehr frei ist, z.B. bei der Positionierung von Kameras oder Mikroskopen, oder bei denen wegen Behinderung keine Hand eingesetzt werden kann, z.B. bei der Führung eines Rollstuhls durch eine querschnittsgelähmte Person.

## Beschreibung

Die Erfindung betrifft ein Eingabegerät mit einem personenbedienbaren Betätigungsteil zum Steuern der Positionierung eines Objekts unter Verwendung eines Kraft-Moment-Sensors, mit welchem Linearverschiebungen und/oder Drehauslenkungen erfaßt und direkt in gesteuerte translatorische und rotatorische Bewegungen bzw. Geschwindigkeiten des zu positionierenden Objekts umgesetzt werden.

Außerdem betrifft die Erfindung Verwendungsmöglichkeiten des Eingabegeräts.

Derartige Kraft-Moment-Sensoren sind beispielsweise aus DE 36 11 336 C2 und EP 0 240 023 B1 bekannt. Mit Hilfe eines solchen, in einem Eingabegerät untergebrachten Kraft-Moment-Sensors lassen sich Linearverschiebungen und/oder Drehauslenkungen erfassen und direkt in translatorische und rotatorische Bewegungen bzw. Geschwindigkeiten eines zu steuernden Objekts umsetzen. So können durch eine Bedienungsperson beispielsweise Apparate, Automaten, Roboter, Manipulatoren oder ähnliche Systeme sowie auch 3D-Computergraphiken von Hand mittels eines Betätigungsteils gesteuert werden.

Der Erfindung liegt die Aufgabe zu Grunde, eine Möglichkeit zu schaffen, die es erlaubt, ein derartiges Eingabegerät so auszubilden, daß sich Objekte durch eine Person gezielt und intuitiv auch dann positionieren lassen, wenn keine Hand zur Bedienung des Betätigungsteils zur Verfügung steht.

Gemäß der Erfindung, die sich auf ein Eingabegerät der eingangs genannten Art bezieht, wird die gestellte Aufgabe dadurch gelöst, daß das Betätigungsteil ein vom Mund oder von einer anderen Kopfpartie, z.B. vom Kinn, einer Person erfaßbares oder aufnehmbares Mund- bzw. Führungsstück aufweist, das so ausgebildet ist, daß das Betätigungsteil durch den Mund bzw. die betreffende Kopfpartie der Person bedienbar ist.

Insbesondere durch den Mund, aber auch vor allem durch das Kinn läßt sich bei Benutzung eines entsprechend ausgebildeten Mund- bzw. Führungsstücks das Betätigungsteil des Eingabegeräts sehr genau und gezielt steuern, so daß eine exakte gewünschte Objektpositionierung möglich ist. Würden zum Zwecke einer Objektpositionierung fußgesteuerte Pedale verwendet werden, so ließe sich hiermit nur eine sehr ungenaue und unvollkommene Steuerung bewerkstelligen, da mit dem Fuß im wesentlichen nur ganz einfache Bewegungen ausgeführt werden können und sich insbesondere Drehbewegungen nur ganz schwer und ungenau bewältigen lassen.

Eine vorteilhafte Verwendungsmöglichkeit des Eingabegeräts nach der Erfindung besteht als dritte Hand immer dann, wenn die beiden Hände einer Person bereits durch die Ausführung einer Tätigkeit beschäftigt sind. Beispielsweise in der Medizintechnik kann das Eingabegerät nach der Erfindung als dritte Hand, z.B. zum Positionieren einer Kamera oder eines Mikroskops während eines Operationsvorgangs, eingesetzt werden.

Eine andere Verwendungsmöglichkeit des Eingabegeräts nach der Erfindung besteht beim Betrieb eines motorisch angetriebenen Rollstuhls, insbesondere bei Behinderung der Bewegungsfähigkeit des Rollstuhlfahrers auch an seinen Händen, wie z.B. bei manchen querschnittgelähmten Personen. Ganz allgemein kann ein gemäß der Erfindung ausgebildetes Eingabegerät im Behindertenbereich auch für andere Zwecke eingesetzt werden.

Auch zur Darstellung eines 3D-Cursors kann ein entsprechend der Erfindung ausgebildetes Eingabegerät benutzt werden.

In vorteilhafter Weise ist das Mundstück bzw. Führungsstück am Betätigungsteil auswechselbar angebracht. Es läßt sich am Betätigungsteil zweckmäßig anschraubbar oder aufsteckbar festmachen. Das Mundstück bzw. Führungsstück läßt sich gemäß einer zweckmäßigen Ausführungsmöglichkeit unter einem auf einen Gewindeaufsatz des Betätigungsteils aufschraubbaren Schraubring am Betätigungsteil festklemmen.

Das am Betätigungsteil des Eingabegeräts angebrachte Mundstück bzw. Führungsstück besteht vorteilhaft entweder aus Kunststoffmaterial oder aus Metall.

Insbesondere bei einer Ausführung des Mundstücks bzw. Führungsstücks aus Kunststoffmaterial kann dieses ein Wegwerfartikel sein. Speziell dann, wenn das Mundstück bzw. Führungsstück aus Metall ist, kann es sterilisierbar ausgebildet sein und damit wieder verwendet werden.

Das Mundstück des Eingabegeräts nach der Erfindung kann die Form eines Beißringes, eines Stiftes, eines Bügels, eines Winkelstückes, eines Kugelaufsatzes, eines Schnullers oder eine andere durch den Mund leicht erfaßbare oder aufnehmbare Gestalt haben.

Das Mundstück kann auch an den Mund einer bedienenden Person speziell angepaßt geformt sein. Das speziell an den Mund einer bedienenden Person angepaßte Mundstück kann dann insbesondere aus Elastomer, beispielsweise aus einer bei der zahnärztlichen Zahnabdrucktechnik verwendeten Formmasse, z.B. Silikon-Kautschuk, bestehen und so ausgebildet sein, daß es auf die Zähne der betreffenden Person aufsetzbar ist.

Ausbildungsmöglichkeiten besonders vorteilhafter Eingabegeräte mit Kraft-Moment-Sensor sind im Patentansprüchen 13 und den auf diesen Anspruch unmittelbar oder mittelbar rückbezogenen Ansprüchen 14 bis 20 angegeben. Derartige oder ähnliche Kraft-Moment-Sensoren sind beispielsweise aus DE 36 11 336 C2 oder EP 0 240 023 B1 bekannt. Mit Hilfe eines solchen in einem Eingabegerät nach der Erfindung untergebrachten Kraft-Moment-Sensors können durch den Mund einer Person mit Hilfe des Mundstücks ausgeführte Linearverschiebungen oder Drehauslenkungen erfaßt und direkt in translatorische und rotatorische Bewegungen bzw. Geschwindigkeiten eines zu positionierenden Objekts umgesetzt werden.

Das mit dem Eingabegerät nach der Erfindung zu steuernde und zu positionierende Objekt kann den Kopfbewegungen der das Mundstück des Betätigungsteils im Mund haltenden Person folgen und entspricht dann somit der Blickrichtung dieser Person. Gerade bei Arbeiten dieser Person an einem Stereomikroskop oder einer Kamera entspricht dies gleichzeitig gewöhnlich den Blickrichtungen, wie sie zu erwarten sind.

Ist beispielsweise eine Person querschnittgelähmt und kann ihre Hände nicht zum Steuern eines motorisch angetriebenen Rollstuhls verwenden, so hat sie mit einem Eingabegerät nach der Erfindung die Möglichkeit, ihren Rollstuhl mit bis zu sechs Freiheitsgraden zu kommandieren und dies in analoger Weise, d.h. je stärker sie z.B. mit dem Mund das Mundstück drückt, desto schneller fährt ihr Rollstuhl. Wenn sie schlagartig das Mundstück losläßt, so geht das Eingabegerät mit seinem Betätigungsteil in seine Nullstellung und der Rollstuhl wird z.B. gestoppt.

Die Person kann das Mundstück vorsichtig nach links oder rechts drehen, was z.B. bewirkt, daß ein Rad mehr angetrieben wird als das andere, was hinwiederum zur Folge hat, daß eine Kurve gefahren werden kann. Dies bedeutet, daß sich eine derart behinderte Person mit ihrem Rollstuhl aufgrund der Verwendung des mit einem Mundstück versehenen Eingabegeräts nach der Erfindung selbständig bewegen kann.

Das Eingabegerät nach der Erfindung kann in vorteilhafter Weise an einem Handgelenk einer Person angebracht werden, so daß es dieser Person immer einsatzbereit zur Verfügung steht.

Nachfolgend wird die Erfindung anhand der Zeichnungen in einzelnen erläutert. Es zeigen:
- Fig.1 bis Fig.5: jeweils in einer Schrägansicht fünf hinsichtlich ihres Mundstücks unterschiedliche Ausführungsbeispiele eines Eingabegeräts nach der Erfindung,
- Fig.6: ein erstes Beispiel für eine praktische Anbringung eines Eingabegeräts nach der Erfindung,
- Fig.7: ein zweites Beispiel für eine praktische Anbringung eines Eingabegeräts nach der Erfindung,
- Fig.8: eine schematische Darstellung eines einen optoelektronischen Kraft-Moment-Sensor enthaltenden Eingabegerätes mit einem teilweise aufgeschnittenen kappenartigen Betätigungsteil, und
- Fig.9: eine im Eingabegerät von Fig.8 untergebrachte optoelektronische Anordnung.

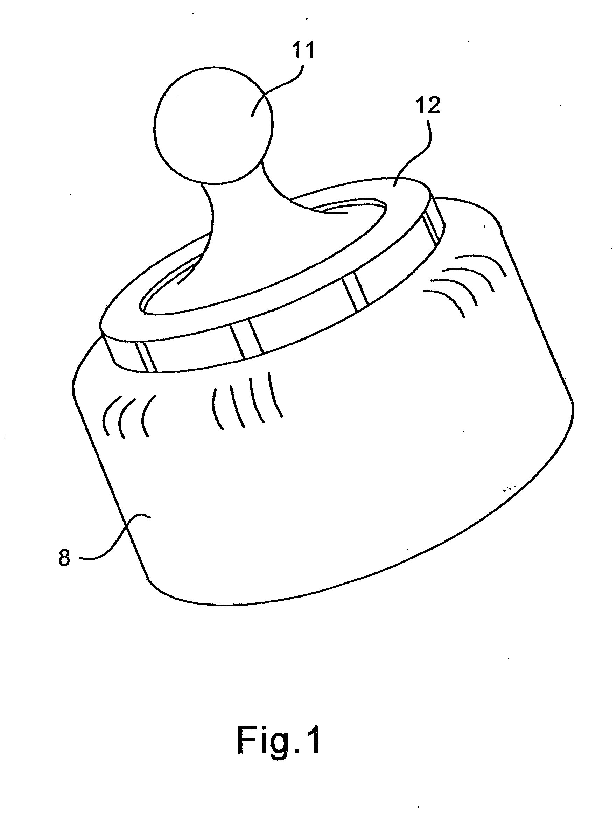

In Fig.1 ist perspektivisch ein Eingabegerät dargestellt, das von außen sichtbar ein kappenartiges Betätigungsteil 8 zum Steuern der Positionierung eines Objekts unter Verwendung eines Kraft-Moment-Sensors aufweist, mit welchem Linearverschiebungen und/oder Drehauslenkungen erfaßt und direkt in gesteuerte translatorische und rotatorische Bewegungen bzw. Geschwindigkeiten des zu positionierenden Objekts umgesetzt werden. Das Betätigungsteil 8 ist oben mit einem vom Mund einer Person aufnehmbaren Mundstück 11 versehen, das so ausgebildet ist, daß das Betätigungsteil 8 durch den Mund der Person bedienbar ist. Das Mundstück 11 ist mittels eines innen mit einem Gewinde versehenen Schraubringes 12 auf dem mit einem Gegengewinde versehenen Betätigungsteil 8 durch Einklemmen befestigt und deshalb leicht abnehmbar, wenn der Schraubring 12 gelöst wird.

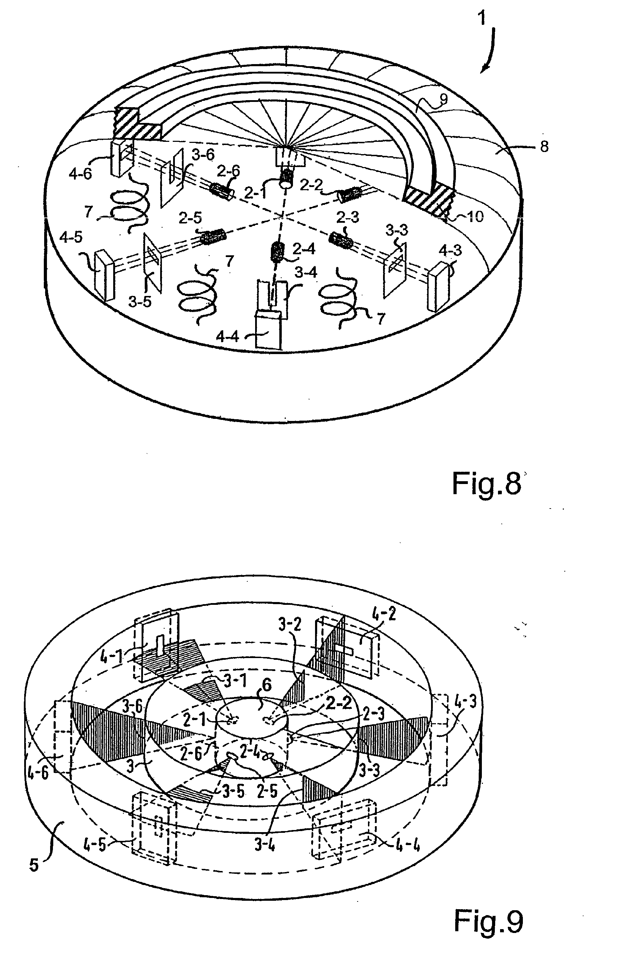

Das Mundstück 11 in Fig.1 hat die Gestalt eines schnullerartigen Kugelaufsatzes und besteht aus Kunststoffmaterial, so daß es als billiger Wegwerfartikel realisierbar ist. Das in Fig.8 und Fig.9 beispielhaft dargestellte Eingabegerät 1 mit Kraft-Moment-Sensor ist zur Wahrnehmung der Bewegungsrichtungen des Mundstücks 11 und damit des hiermit fest verschraubten Betätigungsteils 8 in der Lage und erfaßt sämtliche Linearverschiebungen und Drehauslenkungen, wie sie von einem menschlichen Mund in Form von Kräften und Momenten erzeugt werden können, um die Steuerung und Positionierung des Objekts durchzuführen.

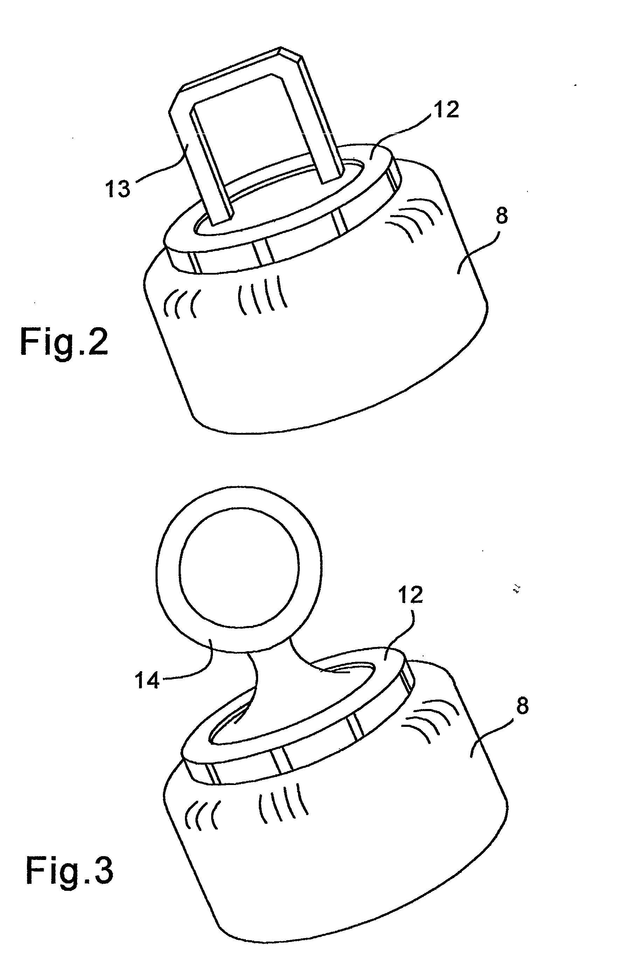

Das Ausführungsbeispiel der Fig.2 unterscheidet sich von demjenigen der Fig.1 lediglich dadurch, daß am Betätigungsteil 8 als Mundstück 13 ein U-förmiger Bügel vorgesehen ist.

Das in Fig.3 dargestellte Ausführungsbeispiel enthält am Betätigungsteil 8 als Mundstück 14 einen Beißring. Ansonsten entspricht dieses Ausführungsbeispiel ebenfalls demjenigen der Fig.1.

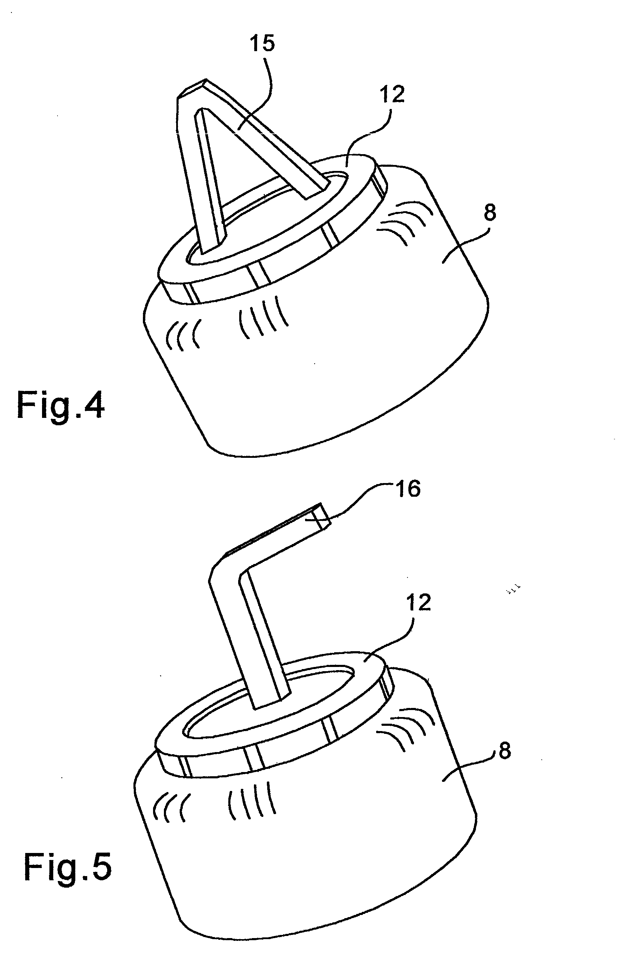

Bei dem in Fig.4 dargestellten Ausführungsbeispiel ist am Betätigungsteil 8 als Mundstück 15 ein V-förmiger Bügel mittels des Schraubringes 12 befestigt. Im übrigen entspricht auch dieses Ausführungsbeispiel demjenigen der Fig.1.

Das Ausführungsbeispiel der Fig.5 unterscheidet sich von demjenigen der Fig.1 nur darin, daß am Betätigungsteil 8 als Mundstück 16 ein Winkelstück vorgesehen ist.

Bei den in den Fig.1 bis Fig.5 dargestellten Ausführungsbeispielen müssen die durch Lösen des Schraubringes 12 vom Betätigungsteil 8 abnehmbaren Mundstücke 11, 13, 14, 15 bzw. 16 nicht unbedingt aus Kunststoffmaterial bestehen, das zwar den Vorzug eines niedrigen Preises und damit nach Gebrauch durch eine Person weggeworfen werden kann, sondern sie können auch aus Metall sein, was eine sichere Sterilisierungsmöglichkeit eröffnet.

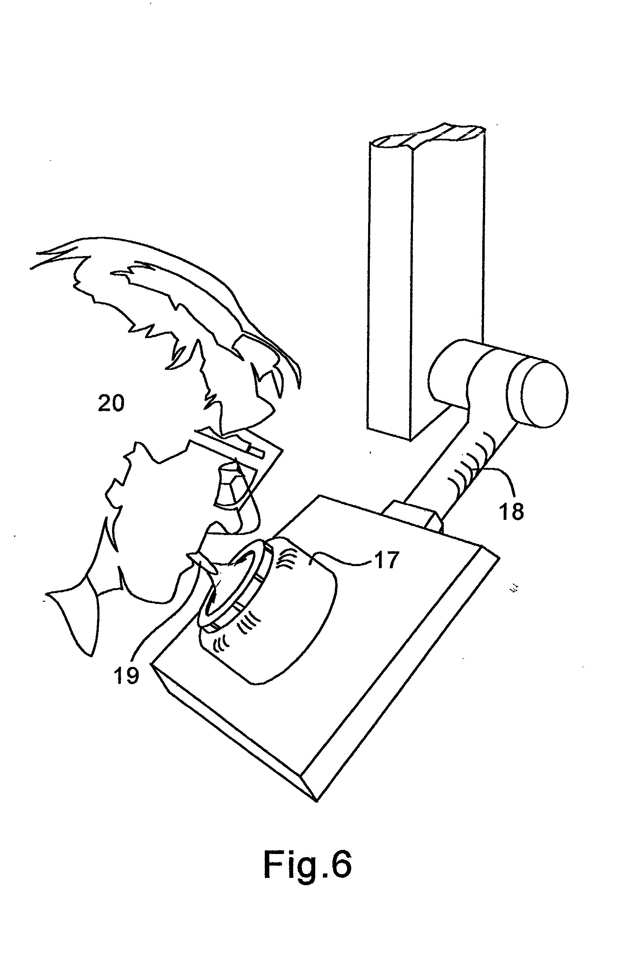

In Fig.6 ist die Anbringung eines entsprechend der Erfindung ausgebildeten Eingabegeräts 17 an einem gelenkig verstellbaren Arbeitsgestell 18 dargestellt. Das in Gestalt eines Beißringes gestaltete Mundstück 19 ist im Augenblick vom Mund einer Bedienperson 20 aufgenommen, um ein in Fig.6 nicht gezeigtes Objekt zu positionieren.

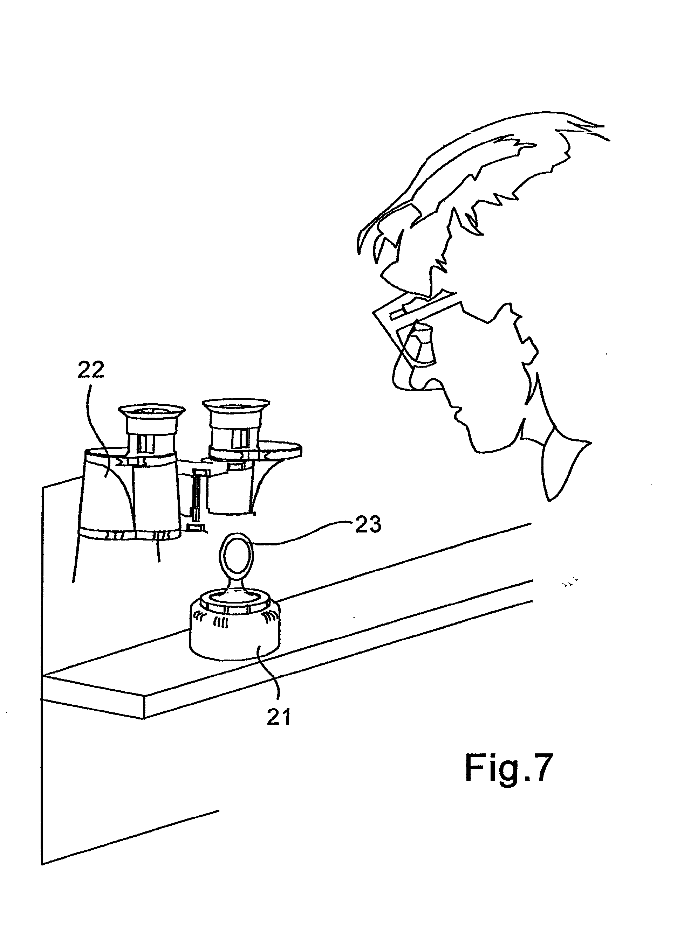

In Fig.7 ist die Verkopplung eines entsprechend der Erfindung ausgebildeten Eingabegeräts 21 mit einem Stereomikroskop 22 dargestellt. Eine Person kann hierdurch mit beiden Händen arbeiten und gleichzeitig das Stereomikroskop 22 räumlich positionieren. Dazu wird einfach das in diesem Fall auch als Beißring gestaltete Mundstück 23 von der Bedienperson in den Mund genommen, und es können dann gezielt hieraus alle Positionen eingestellt werden. Das zu positionierende Stereomikroskop 22 kann dann den Kopfbewegungen der das Mundstück 23 des Betätigungsteils des Eingabegeräts 21 im Mund haltenden Bedienperson folgen und somit dem Blickwinkel entsprechen.

In Fig.8 ist ein Eingabegerät 1 mit Kraft-Moment-Sensor in Form einer in Fig.9 schematisch dargestellten opto-elektronischen Anordnung dargestellt. Das abgebildete Eingabegerät 1 weist ein kappenartiges Betätigungsteil 8 auf, das in Fig.8 teilweise aufgeschnitten ist, so daß ein Teil des schematisch dargestellten Aufbaus eines schematisch angedeuteten Kraft-Moment-Sensors in Form der opto-elektronischen Anordnung zu erkennen ist. Das Betätigungsteil 8 weist oben einen abstehenden Ring 9 mit Außengewinde 10 auf, so daß sich daran mit Hilfe des in den Fig.1 bis Fig.5 dargestellten Schraubringes 12 eines der Mundstücke 11, 13, 14, 15 oder 16 bequem befestigen läßt.

In der in Fig.9 schematisch wiedergegebenen opto-elektronischen Anordnung sind sechs lichtemittierende Einrichtungen 2-1 bis 2-6, vorzugsweise in Form von sechs lichtemittierenden Dioden, in einer Ebene angeordnet. Den lichtemittierenden Einrichtungen 2-1 bis 2-6 ist in einem festen Abstand davor jeweils eine Schlitzblende 3-1 bis 3-6 zugeordnet. Hierbei sind benachbarte Schlitzblenden in einem zylindrischen Ring 3 hinsichtlich ihrer Hauptausdehnungsrichtung jeweils um 90° gegeneinander versetzt ausgebildet, so daß beispielsweise die Schlitzblende 3-1 horizontal und die beiden benachbarten Schlitzblenden 3-2 und 3-6 vertikal ausgerichtet sind.

In der opto-elektronischen Anordnung von Fig.9 sind sechs positionsempfindliche photosensitive Detektoren 4-1 bis 4-6 in einem zylindrischen Ring 5 bezüglich der ihnen zugeordneten Schlitzblenden 3-1 bis 3-6 mit ihrer Detektorachse entsprechend senkrecht ausgerichtet angeordnet. Ferner ist entweder der Ring 5 mit den sechs positionsempfindlichen Detektoren 4-1 bis 4-6 (Variante 1) oder der Ring 3 mit den Schlitzblenden 3-1 bis 3-6 (Variante 2) fest an der Innenseite des kappenartigen Betätigungsteils 8 des Eingabegerätes 1 angebracht.

Da die sechs lichtemittierenden Einrichtungen 2-1 bis 2-6 in Fig.9 in einer schematisch als Zylinder angedeuteten Halterungseinrichtung 6 untergebracht sind, welche ihrerseits im Eingabegerät 1 stationär angeordnet ist, ist über das kappenartige Betätigungsteil 8 entweder der mit dieser fest verbundene Ring 5 mit den daran angebrachten sechs positionsempfindlichen Detektoren 4-1 bis 4-6 gegenüber der stationären Anordnung aus den sechs lichtemittierenden Einrichtungen 2-1 bis 2-6 und dem ihr fest zugeordneten Schlitzblendenring 3 (Variante 1) oder der mit dem Betätigungsteil 8 fest verbundene Ring 3 mit den Schlitzblenden 3-1 bis 3-6 gegenüber der stationären Anordnung aus den sechs lichtemittierenden Einrichtungen 2-1 bis 2-6 und dem die sechs positionsempfindlichen Detektoren 4-1 bis 4-6 tragenden Ring 5 (Variante 2) bewegbar.

Die stationäre, in Fig.9 schematisch als Zylinder angedeutete Halterungseinrichtung 6 kann bei einer praktischen Ausführungsform beispielsweise auch als eine stationäre Scheibe ausgeführt sein, deren Durchmesser etwa dem Außendurchmesser des die positionsempfindlichen Detektoren 4-1 bis 4-6 tragenden Ringes 5 entspricht und welche über oder unter dem Ring 5 angeordnet sein kann.

Zwischen dem die positionsempfindlichen Detektoren 4-1 bis 4-6 tragenden Ring 5 (Variante 1) bzw. dem die Schlitzblenden 3-1 bis 3-6 enthaltenden Ring 3 (Variante 2) und einer solchen scheibenförmigen Halterungseinrichtung sind Federelemente 7 (siehe Fig.8) in Form von Schraubenfedern vorgesehen, welche mittels nicht näher dargestellten Schraubbolzen sowohl dem Ring 5 (Variante 1) bzw. dem Ring 3 (Variante 2) als auch der Halterungseinrichtung 6 fest zugeordnet sind.

Durch die Schraubenfedern 7 wird erreicht, daß der die Detektoren 4-1 bis 4-6 tragende Ring 5 (Variante 1) bzw. der die Schlitzblenden 3-1 bis 3-6 enthaltende Ring 3 (Variante 2) über das kappenartige Betätigungsglied 8 bezüglich der stationären Anordnung der lichtemittierenden Dioden 2-1 bis 2-6 und dem diesen fest zugeordneten Schlitzblendenring 3 (Variante 1) bzw. dem die sechs positionsempfindlichen Detektoren 4-1 bis 4-6 tragenden Ring 5 (Variante 2) in Richtung der drei Achsen x, y, z eines rechtwinkligen räumlichen Koordinatensystems und um diese drei Achsen bewegbar ist und nach jeder Linearverschiebung oder Drehauslenkung jeweils wieder in seine Ausgangslage zurückkehrt.

Die sechs positionsempfindlichen Detektoren 4-1 bis 4-6 sind in gleichen Winkelabständen voneinander, d.h. unter einem Winkel von 60°, in einer Ebene angeordnet. Den sechs positionsempfindlichen Detektoren 4-1 bis 4-6 vorgelagert sind abwechselnd horizontal und vertikal ausgerichtete Schlitzblenden 3-1 bis 3-6. Wie aus der Lage der einzelnen Schlitzblenden 3-1 bis 3-6 und der durch Schraffur hervorgehobenen und von den einzelnen Dioden 2-1 bis 2-6 ausgehenden Ebenen zu ersehen ist, sind die Detektorachsen der einzelnen positionsempfindlichen Detektoren 4-1 bis 4-6 immer senkrecht zu den ihnen zugeordneten Schlitzblenden 3-1 bis 3-6 ausgerichtet.

Mit der opto-elektronischen Anordnung ist eine vollständige Erfassung aller sechs möglichen Bewegungskomponenten, nämlich der drei translatorischen Bewegungen in Richtung der drei Achsen x, y und z eines rechtwinkligen räumlichen Koordinatensystems und der drei rotatorischen Bewegungen um diese drei Achsen x, y und z erreicht. Da das kappenartige Betätigungsteil 8 fest an dem die Detektoren 4-1 bis 4-6 tragenden Ring 5 (Variante 1) oder an dem die Schlitzblenden 3-1 bis 3-6 enthaltenden Schlitzblendenring 3 (Variante 2) angebracht ist und dieser Ring 5 (Variante 1) bzw. der Ring 3 (Variante 2) mittels der Federelemente 7 (Fig.8) federnd mit der stationären Halterungseinrichtung 6 verbunden ist, welche die sechs Dioden 2-1 bis 2-6 und die diesen zugeordneten Schlitzblenden 3-1 bis 3-6 (Variante 1) bzw. die positionsempfindlichen Detektoren 4-1 bis 4-6 (Variante 2) trägt, halten die Federelemente 7 das gesamte Meßsystem in der mechanischen Nullstellung, wenn keine Kommandos von der bedienenden Person auf das kappenartige Betätigungsteil 8 aufgebracht werden.

Hierbei läßt sich durch Variation der Federeigenschaften (insbesondere deren Steifigkeit) die Betriebscharakteristik des kappenartigen Betätigungsteils 8 in weiten Grenzen beeinflussen. Bei Verwendung von verhältnismäßig weichen Federelementen 7 wirkt das Eingabegerät 1 eher als ein wegempfindlicher Sensor, während bei Verwenden von härteren Federelementen 7 Kommandos mehr durch Ausüben von Kräften und Momenten erteilt werden.

Ferner ist bei der opto-elektronischen Anordnung jedem positionsempfindlichen Detektor je eine eigene Lichtquelle zugeordnet, welche durch eine einfache Regelelektronik angesteuert wird. Mit Hilfe dieser Regelelektronik werden dann beispielsweise unterschiedliche Detektor-Empfindlichkeiten, unterschiedliche Leuchtdioden-Wirkungsgrade, Toleranzen in den elektronischen Bauelementen sowie Temperaturdriften automatisch und schnell ausgeregelt. Auf diese Weise ist auch kein zusätzlicher Abgleich erforderlich.

### Bezugszeichenliste

- 1: Eingabegerät
- 2-1 bis 2-6: Lichtemittierende Einrichtungen
- 3: Zylindrischer Ring
- 3-1 bis 3-6: Schlitzblenden
- 4-1 bis 4-6: Positionsempfindliche Detektoren
- 5: Zylindrischer Ring
- 6: Halterungseinrichtung
- 7: Federelemente in Form von Schraubenfedern
- 8: Betätigungsteil
- 9: Abstehender Ring
- 10: Außengewinde
- 11: Mundstück
- 12: Schraubring
- 13 bis 16: Mundstück
- 17: Eingabegerät
- 18: Arbeitsgestell
- 19: Mundstück
- 20: Bedienperson
- 21: Eingabegerät
- 22: Stereomikroskop
- 23: Mundstück

## Patentansprüche

1. Eingabegerät mit einem personenbedienbaren Betätigungsteil zum Steuern der Positionierung eines Objekts unter Verwendung eines Kraft-Moment-Sensors, mit welchem Linearverschiebungen und/oder Drehauslenkungen erfaßt und direkt in gesteuerte translatorische und rotatorische Bewegungen bzw. Geschwindigkeiten des zu positionierenden Objekts umgesetzt werden, **dadurch gekennzeichnet, daß** das Betätigungsteil (8) ein vom Mund oder von einer anderen Kopfpartie, z.B. vom Kinn, einer Person erfaßbares oder aufnehmbares Mundstück (11) bzw. Führungsstück aufweist, das so ausgebildet ist, daß das Betätigungsteil durch den Mund bzw. die betreffende Kopfpartie der Person bedienbar ist.

2. Eingabegerät nach Anspruch 1, **dadurch gekennzeichnet, daß** das Mundstück (11) bzw. Führungsstück am Betätigungsteil (8) auswechselbar angebracht ist.

3. Eingabegerät nach Anspruch 2, **dadurch gekennzeichnet, daß** das Mundstück (11) bzw. Führungsstück am Betätigungsteil (8) anschraubbar angebracht ist.

4. Eingabegerät nach Anspruch 3, **dadurch gekennzeichnet, daß** das Mundstück (11) bzw. Führungsstück unter einem auf einen Gewindeaufsatz des Betätigungsteils (8) aufschraubbaren Schraubring (12) am Betätigungsteil festklemmbar ist.

5. Eingabegerät nach Anspruch 2, **dadurch gekennzeichnet, daß** das Mundstück bzw. Führungsstück am Betätigungsteil aufsteckbar angebracht ist.

6. Eingabegerät nach einem der vorhergehenden Ansprüche, **dadurch gekennzeichnet, daß** das Mundstück (11) bzw. Führungsstück aus Kunststoffmaterial besteht.

7. Eingabegerät nach einem der Ansprüche 1 bis 5, **dadurch gekennzeichnet, daß** das Mundstück (11) bzw. Führungsstück aus Metall besteht.

8. Eingabegerät nach einem der Ansprüche 2 bis 7, **dadurch gekennzeichnet, daß** das Mundstück (11) bzw. Führungsstück ein Wegwerfartikel ist.

9. Eingabegerät nach einem der Ansprüche 2 bis 7, **dadurch gekennzeichnet, daß** das Mundstück (11) bzw. Führungsstück sterilisierbar ist.

10. Eingabegerät nach einem der vorhergehenden Ansprüche, **dadurch gekennzeichnet, daß** das Mundstück die Form eines Beißringes (14), eines Stiftes, eines Bügels (13; 15), eines Winkelstückes (16), eines Kugelaufsatzes, eines Schnullers (11) oder eine andere durch den Mund leicht erfaßbare oder aufnehmbare Gestalt hat.

11. Eingabegerät nach einem der Ansprüche 1 bis 9, **dadurch gekennzeichnet, daß** das Mundstück an den Mund einer bedienenden Person speziell angepaßt geformt ist.

12. Eingabegerät nach Anspruch 11, **dadurch gekennzeichnet, daß** das speziell an den Mund einer bedienenden Person angepaßte Mundstück aus Elastomer, beispielsweise aus einer bei der zahnärztlichen Zahnabdrucktechnik verwendeten Formmasse, z.B. Silikon-Kautschuk, besteht und so ausgebildet ist, daß es auf die Zähne der betreffenden Person aufsetzbar ist.

13. Eingabegerät nach einem der vorhergehenden Ansprüche, **dadurch gekennzeichnet, daß** als Kraft-Moment-Sensor eine optoelektronische Anordnung zum gleichzeitigen Eingeben von sechs Komponenten in bzw. um die drei Achsen x, y, z eines rechtwinkligen räumlichen Koordinatensystems vorgesehen ist, wobei jede von mindestens sechs in gleichen Winkelabständen voneinander in einer Ebene angebrachten lichtemittierenden Einrichtungen (2-1 bis 2-6) mit jeweils vorgelagerter Schlitzblende (3-1 bis 3-6) gegenüber je einem mit seiner Detektorachse senkrecht zur Schlitzrichtung der jeweils zugeordneten Schlitzblende (3-1 bis 3-6) ausgerichteten, positionsempfindlichen Detektor (4-1 bis 4-6) so vorgesehen ist, daß die Schlitzblenden (3-1 bis 3-6) und die positionsempfindlichen Detektoren (4-1 bis 4-6) relativ gegeneinander bewegbar sind, und daß entweder in einer ersten Variante alle fest miteinander verbundenen positionsempfindlichen Detektoren (4-1 bis 4-6) oder in einer zweiten Variante alle fest miteinander verbundenen Schlitzblenden (3-1 bis 3-6) zugleich mit dem Betätigungsteil verbunden sind und als einheitliches Teil beweglich sind.

14. Eingabegerät nach Anspruch 13, **dadurch gekennzeichnet, daß** in der ersten Variante sechs lichtemittierende Einrichtungen (2-1 bis 2-6) mit jeweils in einem festen Abstand vorgelagerter Schlitzblende (3-1 bis 3-6) stationär vorgesehen sind, daß benachbarte Schlitzblenden hinsichtlich ihrer Hauptausdehnungsrichtung jeweils um 90° versetzt ausgebildet sind und daß sechs gemeinsam in bezug auf die Schlitzblenden (3-1 bis 3-6) bewegliche, positionsempfindliche Detektoren (4-1 bis 4-6) vorgesehen sind, deren jeweilige Detektorachse senkrecht zur Schlitzrichtung der jeweils zugeordneten Schlitzblende (3-1 bis 3-6) ausgerichtet ist und die mit dem Betätigungsteil (8) fest verbunden sind.

15. Eingabegerät nach Anspruch 13 oder 14, **dadurch gekennzeichnet, daß** in der ersten Variante die positionsempfindlichen Detektoren (4-1 bis 4-6) auf der Innenseite eines zylindrischen Ringes (5) entsprechend ausgerichtet angeordnet sind, der an der Innenseite eines außen mit dem Mundstück versehenen, kappenartig geformten Betätigungsteils (8) fest angebracht ist und der über zwischen dem Ring (5) und einer in der Mitte die lichtemittierenden Einrichtungen (2-1 bis 2-6) tragenden Halterungseinrichtung (6) vorgesehene Federelemente (7) bezüglich der stationären Anordnung aus den mindestens sechs lichtemittierenden Einrichtungen (2-1 bis 2-6) und den diesen jeweils zugeordneten mindestens sechs Schlitzblenden (3-1 bis 3-6) so bewegbar ist, daß er (5) immer wieder in seine Ausgangslage zurückkehrt.

16. Eingabegerät nach einem der Ansprüche 13 bis 15, **dadurch gekennzeichnet, daß** bei der ersten Variante die mindestens sechs lichtemittierenden Einrichtungen (2-1 bis 2-6) in einer Halteeinrichtung (6) untergebracht sind, mit der ein zylindrischer Ring (3) fest verbunden ist, in welchem in den gleichen Winkelabständen wie die an der Halterungseinrichtung (6) angebrachten lichtemittierenden Einrichtungen (2-1 bis 2-6) und diesen in radialer Richtung gegenüberliegend abwechselnd die hinsichtlich ihrer Hauptausdehnungsrichtung jeweils um 90° gegeneinander versetzten Schlitzblenden (3-1 bis 3-6) vorgesehen sind.

17. Eingabegerät nach Anspruch 13, **dadurch gekennzeichnet, daß** in der zweiten Variante sechs lichtemittierende Einrichtungen (2-1 bis 2-6) mit jeweils vorgelagerter Schlitzblende (3-1 bis 3-6) vorgesehen sind, daß benachbarte Schlitzblenden hinsichtlich ihrer Hauptausdehnungsrichtung jeweils um 90° versetzt ausgebildet sind, daß sechs positionsempfindliche Detektoren (4-1 bis 4-6) vorgesehen sind, deren jeweilige Detektorachse senkrecht zur Schlitzrichtung der jeweils zugeordneten Schlitzblende (3-1 bis 3-6) ausgerichtet ist, und daß alle Schlitzblenden (3-1 bis 3-6) mit dem Betätigungsteil (8) fest verbunden und gemeinsam in bezug auf die sechs feststehenden positionsempfindlichen Detektoren (4-1 bis 4-6) beweglich sind.

18. Eingabegerät nach Anspruch 13 oder 17, **dadurch gekennzeichnet, daß** in der zweiten Variante die Schlitzblenden (3-1 bis 3-6) in einem zylindrischen Ring (3) entsprechend ausgerichtet angeordnet sind, der an der Innenseite eines außen mit dem Mundstück versehenen, kappenartig geformten Betätigungsteils (8) fest angebracht ist und der über zwischen dem Ring (3) und einer in der Mitte die lichtemittierenden Einrichtungen (2-1 bis 2-6) tragenden Halterungseinrichtung (6) vorgesehene Federelemente (7) bezüglich der stationären Anordnung aus den mindestens sechs lichtemittierenden Einrichtungen (2-1 bis 2-6) und den diesen jeweils zugeordneten mindestens sechs positionsempfindlichen Detektoren (4-1 bis 4-6) so bewegbar ist, daß er (3) immer wieder in seine Ausgangslage zurückkehrt.

19. Eingabegerät nach einem der Ansprüche 13, 17 und 18, **dadurch gekennzeichnet, daß** bei der zweiten Variante die mindestens sechs lichtemittierenden Einrichtungen (2-1 bis 2-6) in einer Halteeinrichtung (6) untergebracht sind, mit der ein zylindrischer Ring (5) fest verbunden ist, in welchem in den gleichen Winkelabständen wie die an der Halterungseinrichtung (6) angebrachten lichtemittierenden Einrichtungen (2-1 bis 2-6) und diesen in radialer Richtung gegenüberliegend die hinsichtlich ihrer Detektorachse abwechselnd jeweils um 90° gegeneinander versetzten positionsempfindlichen Detektoren (4-1 bis 4-6) vorgesehen sind.

20. Eingabegerät nach einem der Ansprüche 13 bis 19, **dadurch gekennzeichnet, daß** die jedem positionsempfindlichen Detektor (4-1 bis 4-6) einzeln zugeordnete lichtemittierende Einrichtung (2-1 bis 2-6) jeweils mit einer Regelelektronik angesteuert wird, welche die Summe der beiden in dem zugehörigen positionsempfindlichen Detektor (4-1 bis 4-6) fließenden Ströme konstant auf einem für alle der mindestens sechs Systeme gleichen Wert hält und dazu die Strahlungsintensität der lichtemittierenden Einrichtungen (2-1 bis 2-6) regelt.

21. Eingabegerät nach einem der vorhergehenden Ansprüche, **gekennzeichnet durch** eine Anbringung an einem Handgelenk einer Person.

22. Verwendung des gemäß einem der vorhergehenden Ansprüche ausgebildeten Eingabegeräts als dritte Hand immer dann, wenn die beiden Hände einer Person bereits durch die Ausführung einer Tätigkeit beschäftigt sind.

23. Verwendung nach Anspruch 22 in der Medizintechnik als dritte Hand, z.B. zum Positionieren einer Kamera oder eines Mikroskops während eines Operationsvorgangs.

24. Verwendung des gemäß einem der Ansprüche 1 bis 21 ausgebildeten Eingabegeräts für den Betrieb eines motorisch angetriebenen Rollstuhls, insbesondere bei Behinderung der Bewegungsfähigkeit des Rollstuhlfahrers auch an seinen Händen, wie z.B. bei querschnittgelähmten Personen.

25. Verwendung des gemäß einem der Ansprüche 1 bis 21 ausgebildeten Eingabegeräts im Behindertenbereich.

26. Verwendung des gemäß einem der Ansprüche 1 bis 21 ausgebildeten Eingabegeräts zur Darstellung eines 3D-Cursors.
